# EUROPEAN PATENT SPECIFICATION

(11) **EP 2 874 973 B1**
(45) Date of publication and mention of the grant of the patent: **02.10.2024**
(21) Application number: 13763441.6
(22) Date of filing: 11.09.2013
(51) Int. Cl.: C04B 28/14, C04B 18/02

(54) **DRY-MIX COMPOSITIONS COMPRISING GYPSUM AND CELLULOSE ETHER AGGLOMERATES**
TROCKENMISCHZUSAMMENSETZUNGEN MIT GIPS UND CELLULOSEETHERAGGLOMERATEN
COMPOSITIONS DE MÉLANGE SEC COMPRENANT DU GYPSE ET DES AGGLOMÉRATS D'ÉTHER DE CELLULOSE

(30) Priority: 14.09.2012 US 201261701147 P
(43) Date of publication of application: 27.05.2015
(73) Proprietor: Dow Global Technologies LLC, Midland, MI 48674 (US)
(72) Inventor: NEUBAUER, Joerg, 21075 Hamburg (DE); ADDEN, Roland, 29664 Walsrode (DE); BAUMANN, Robert, CH-8803 Rueschlikon (CH)
(74) Representative: Houghton, Mark Phillip
(86) International application number: PCT/US2013/059146
(87) International publication number: WO 2014/043168

(56) References cited:
- EP-A1- 1 445 278
- EP-A2- 2 412 690
- WO-A1-2008/122345
- WO-A1-2009/018876
- WO-A1-2012/005960
- WO-A1-2012/040024
- WO-A1-99/64368
- WO-A2-2013/085897
- CN-A- 101 033 123
- CN-A- 101 121 597
- DE-A1- 102007 016 726
- GB-A- 1 115 761
- US-A1- 2005 056 187

## Description

### FIELD

The present invention relates to a dry-mix composition comprising gypsum and agglomerated cellulose ether. The present invention also relates to a method for using cellulose ether agglomerates in a dry-mix composition to cause thickening and water retention with little clumping upon hydration of the dry-mix composition to a mortar, in particular a gypsum-containing mortar.

### BACKGROUND

Dry-mix compositions are useful for preparing mineral-based binder compositions collectively referred to herein as "mortars". Mortars are generally prepared at the point of use by mixing a dry-mix composition with water in an amount sufficient to enable the application of the resultant mortar to a surface before the mortar sets. Dry-mix compositions comprising gypsum are widely used. Gypsum-containing dry-mix compositions typically also contain additives including thickeners and water retention additives. One common thickener and water retention additive is cellulose ether.

Dry-mix compositions comprising both gypsum and cellulose ether can be challenging to hydrate into a mortar. Cellulose ether particles thicken a mortar when they become hydrated upon combination with water. Upon hydration of a dry-mix composition, the aqueous mobile phase of the mortar tends to bind to cellulose ether rather than gypsum, and additional water is hindered by the increasing viscosity from being dispersed among gypsum particles. As a result, it is difficult to achieve uniform wetting of the gypsum particles. Such non-uniform wetting of the gypsum particles can result in "clumping" of the mortar as localized dry particle inclusions of the gypsum form within the mortar. Clumping undesirably produces an inhomogeneous mortar that has visual and structural defects both during application and after setting. Additionally, clumps can cause streaking and lump formation in a mortar coating during application, thereby frustrating smooth application of a gypsum-containing mortar.

Attempts have been made to reduce clumping in gypsum-containing mortars. WO2008/122345 discloses a process for the preparation of mill-dried methyl hydroxypropyl cellulose (MHPC) and its use in gypsum-containing mortars. The process includes mill-drying water- and optionally alcohol-moist MHPC as feed material, which has a DS (methyl), that is, degree of substitution of methyl groups, of 1.50 to 2.1, an MS (hydroxypropyl), that is, molar substitution of hydroxypropyl groups, of 0.40 to 1.5, and a water content of 25 to 60 weight percent. The production cost of such cellulose ethers is very high and the process yields a waste water stream that is both undesirable and costly to dispose of.

The problem of clumping is also addressed in WO2009/018876, wherein an alkyl hydroxyalkyl cellulose (AHAC) is treated with a crosslinking agent such as glyoxal, the crosslinking agent serving for temporary crosslinking of the AHAC. This technology requires careful control of the pH value when applying in a mortar. A high pH value (>10) may induce rapid cleavage of the crosslinking while a low pH value (<8) may have adverse effects on water retention. Accordingly, the pH of the mortar must be carefully controlled in order to minimize clumping while maintaining water retention of the mortar.

WO 2008/122344 discloses the preparation of methylhydroxyethylhydroxypropyl-cellulose (MHEHPC) and the use thereof in mineral-bound building material systems, preferably gypsum-bound building material systems, particularly preferably in gypsum machine plaster.

EP-A-2412690 discloses polysaccharide derivatives having an adjusted particle morphology for use in the preparation of a hydrolytically setting composition having an adjusted lump rating.

It would therefore be desirable to provide a dry-mix composition that comprises both gypsum and cellulose ether, which when mixed with water forms a gypsum-containing mortar with minimal clumping, without compromising thickening and water retention properties of the mortar. It would be also desirable to provide a method for minimizing clumping of the mortar that does not require pH value control. In addition, it would be desirable to minimize clumping without requiring the high-cost production process or waste water treatment in WO2008/122345.

### BRIEF SUMMARY

The dry-mix composition of the present invention advances the art by surprisingly resulting in little clumping when mixed with water to form a mortar. At the same time, the mortar still has comparable thickening and water retention properties as compared with a mortar comprising non-agglomerated cellulose ether. Such a dry-mix composition does not require the high-cost production process or additional facilities for waste water treatment as incumbent technologies. In addition, using the dry-mix composition of the present invention to form a mortar does not require a control of pH value of the mortar.

Surprisingly, the dry-mix composition of the present invention provides this advancement through use of cellulose ether agglomerates in the dry-mix composition. It is particularly desirable to use cellulose ether agglomerates that have a time to 95% viscosity build-up of 15 minutes or less, as determined by the testing method described in the Examples section below.

The present invention is a dry-mix composition comprising: (a) gypsum powder, and (b) cellulose ether agglomerates, wherein the cellulose ether is methylcellulose, hydroxyethyl methylcellulose, hydroxypropyl methylcellulose, hydroxypropyl cellulose, hydroxyethyl cellulose or mixtures thereof, wherein the cellulose ether agglomerates comprise cellulose ether particles bound together with an aqueous solution of carboxymethyl cellulose or pure water, and wherein the total amount of the binding liquid added to the raw material cellulose ether particles is 20 to 33 weight %, based on the total weight of the raw material cellulose ether particles and the binding liquid, and further wherein less than 14 wt% of the cellulose ether agglomerate particles have particle size smaller than 63 µm after sieving, and the fraction of cellulose ether agglomerate particles with particle size of 200-1,000 µm is from more than 20 to 50 wt%, where weight percent of particles is based on the total weight of the cellulose ether agglomerates.

The present invention is also a method for using cellulose ether agglomerates in a dry-mix composition to cause thickening and water retention with little clumping upon hydration of the dry-mix composition to a mortar, the method comprising including cellulose ether agglomerates in a dry-mix composition comprising gypsum powder, wherein the cellulose ether is methylcellulose, hydroxyethyl methylcellulose, hydroxypropyl methylcellulose, hydroxypropyl cellulose and hydroxyethyl cellulose or mixtures thereof, wherein the cellulose ether agglomerates comprise cellulose ether particles bound together with an aqueous solution of carboxymethyl cellulose or pure water, and wherein the total amount of the binding liquid added to the raw material cellulose ether powders is 20 to 33 weight % or less, based on the total weight of the raw material cellulose ether particles and the binding liquid, and further wherein less than 14 wt% of the cellulose ether agglomerate particles have particle size smaller than 63 µm after sieving, and the fraction of cellulose ether agglomerate particles with particle size of 200-1,000 µm is from more than 20 to 50 wt%, where weight percent of particles is based on the total weight of the cellulose ether agglomerates.

### DESCRIPTION

Test methods refer to the most recent test methods as of the priority date of this application when a date is not indicated with the test method number. References to test methods contain both a reference to the testing society and the test method number. The following test method abbreviations and identifiers apply herein: ISO refers to International Organization for Standards; and EN refers to European Norm;
"And/or" means "and, or as an alternative". All ranges include endpoints unless otherwise indicated.

"Little" clumping refers to at least 50% reduction of average size-dependant clumps count in a mortar, as compared to a mortar containing the same concentration of conventional cellulose ether, that is, non-agglomerated cellulose ether. The average size-dependant clumps count is determined by the testing method described in the Examples section below.

The dry-mix composition of the present invention comprises cellulose ether agglomerates, also known as agglomerated cellulose ether, which refers to a composition of agglomerated particles of cellulose ether. These particles of the cellulose ether agglomerates are agglomerated together directly or through a binder. These particles can be agglomerated with carboxymethyl cellulose (CMC) as the binder. If present, the amount of CMC in the cellulose ether agglomerates is desirably 4 weight percent or less, 3 weight percent or less, or even 2.5 weight percent or less. At the same time, the amount of CMC (if present) in the cellulose ether agglomerates is desirably 0.3 weight percent or more, 0.5 weight percent or more, or even 0.7 weight percent or more. Weight percentage of CMC in the cellulose ether agglomerates is based on the total weight of the agglomerates.

The cellulose ether agglomerates of the present invention have a dust content less than 14 weight percent. The dust content is the fraction of particles with particle size of smaller than 63 micron after sieving the cellulose ether agglomerates accordingly. In the cellulose ether agglomerates, the fraction of particles with particle size of 200-1,000 microns is more than 20 weight percent. At the same time, the fraction of particles with particle size of 200-1,000 microns is 50 weight percent or less. Weight percentage of particles is based on the total weight of the cellulose ether agglomerates.

The cellulose ether agglomerates of the present invention may generally be porous in structure. The cellulose ether agglomerates may have a surface area of 0.18 square meter per gram (m²/g) or more, 0.20 m²/g or more, or even 0.21 m²/g or more. At the same time, the surface area of the cellulose ether agglomerates may be 0.50 m²/g or less, or even 0.40 m²/g or less. The surface area is determined by the testing method described in the Examples section below. If the surface area of the cellulose ether agglomerates is lower than 0.18 m²/g, the dry-mix composition comprising thereof may result in inferior clumping performance when mixed with water to form a mortar.

The cellulose ether agglomerates of the present invention hydrate quickly with a time to 95% viscosity build-up desirably less than 15 minutes, preferably 13 minutes or less, or even more preferably 10 minutes or less. Time to 95% viscosity build-up is determined by the testing method described in the Examples section below.

The cellulose ether agglomerates of the present invention can comprise one or more than one type of cellulose ether. Suitable types of cellulose ether include methylcellulose (MC), hydroxyethyl methyl cellulose (HEMC), hydroxypropyl methylcellulose (HPMC), hydroxypropyl cellulose (HPC), hydroxyethyl cellulose (HEC) and mixtures thereof. Preferably, the cellulose ether is hydroxyethyl methyl cellulose and/or hydroxypropyl methylcellulose. More preferably, the cellulose ether is hydroxyethyl methyl cellulose.

The viscosity grade of the cellulose ether agglomerates of the present invention is desirably 400 millipascal. seconds (mPa. s) or more, 600 mPa.s or more, or even 800 mPa.s or more. At the same, the viscosity grade of the cellulose ether agglomerates is desirably 20,000 mPa.s or less; 15,000 mPa.s or less; or even 13,000 mPa.s or less. Viscosity of the cellulose agglomerates is measured as one weight percent aqueous solution at 20 degree Celsius (°C) using a Viscotester VT 550 rotational viscometer.

The cellulose ether agglomerates of the present invention may have a DS (methyl) of 1.0 or higher, 1.1 or higher, or even 1.2 or higher. At the same time, the cellulose ether agglomerates may have a DS (methyl) of 2.2 or lower, 2.1 or lower, or even 2.0 or lower. DS (methyl) refers to the degree of substitution of methyl groups, that is, the average number of hydroxyl groups substituted by methyl groups per anhydroglucose unit in the cellulose ether. The cellulose ether agglomerates may have a MS (hydroxyalkyl) of 1.0 or less, 0.8 or less, or even 0.6 or less. At the same time, the cellulose ether agglomerates may have a MS (hydroxyalkyl) of 0, or 0.01 or higher, or even 0.05 or higher. MS (hydroxyalkyl) is abbreviation of "molar substitution." MS (hydroxyalkyl) refers to the average number of moles of hydroxyalkyl groups per anhydroglucose unit in the cellulose ether. DS (methyl) and MS (hydroxyalkyl) values can be determined by Zeisel cleavage of the cellulose ether with hydrogen iodide and subsequent quantitative gas chromatographic analysis (G. Bartelmus and R. Ketterer, Z. Anal. Chem., 286 (1977) 161-190).

The cellulose ether agglomerates of the present invention are desirably produced by a process comprising the steps of: introducing cellulose ether particles into a mixing device; adding at least 20 weight percent a binding liquid to the cellulose ether particles, to form cellulose ether agglomerates; and drying the agglomerates by non-contact drying means. Weight percentage of the binding liquid is based on the total weight of the cellulose ether particles and the binding liquid.

In producing the cellulose ether agglomerates of the present invention, the cellulose ether particles introduced into a mixing device refer to raw material cellulose ether powders. The introduction of raw material cellulose ether powders can be carried out in a continuous process, batch, or semi-batch process. The raw material cellulose ether may include methylcellulose, hydroxyethyl methyl cellulose, hydroxypropylmethyl cellulose, hydroxypropyl cellulose, hydroxyethyl cellulose or mixtures thereof. Examples of the raw material cellulose ethers include those commercially available from Dow Wolff Cellulosics GmbH under tradenames WALOCEL^{™} MKX 60000 PF 01 hydroxyethyl methylcellulose, METHOCEL^{™} 254 hydroxypropyl methylcellulose or mixtures thereof (WALOCEL and METHOCEL are trademarks of The Dow Chemical Company).

Some features of the raw material cellulose ether powders, such as the degree of substitution, remain constant throughout the process of producing the cellulose ether agglomerates. Physical and hydration features of the raw material cellulose ether powders, however, may be changed by the described process. The raw material cellulose ether powders are slow to hydrate with a time to 95% viscosity build-up of 30 minutes or more, 25 minutes or more, or even 20 minutes or more. The raw material cellulose ether powders generally retain a large percentage of dust, that is, 30 weight percent or more, 40 weight percent or more, or even 50 weight percent or more, particles with particle size of smaller than 63 microns. The fraction of particles with particle size of 200-1,000 microns in the cellulose ether agglomerates is desirably less than 20 weight percent, less than 10 weight percent, or even less than 5 weight percent in the raw material cellulose ether powders. Weight percentage of particles is based on the total weight of the raw material cellulose ether powders. In addition, the raw material cellulose ether powders may have comparable or higher surface area, as compared to the cellulose ether agglomerates obtained. The raw material cellulose ether powders may generally have a surface area of 0.25 m²/g or more, or even 0.28 m²/g or more, at the same time, may be 0.50 m²/g or less, or even 0.40 m²/g or less, as determined by the testing method described in the Examples section below.

Suitable mixing devices for preparing the cellulose ether agglomerates of the present invention include a fluid bed processor and a high shear mixer. Examples of suitable fluid bed processors include Glatt GPCG series from Glatt. Examples of suitable high shear mixers include ring layer mixers, Ploughshare mixers, Schugi mixers, and Turbulizer mixers. Preferably, the high shear mixer is a ring layer mixer. Suitable mixing devices for the present invention also include those for example described in PCT Patent Application publication WO2012/040024.

When preparing the cellulose ether agglomerates of the present invention, the binding liquid added to the cellulose ether particles (that is, raw material cellulose ether powders) is desirably pure water or an aqueous solution of CMC. The binding liquid may be free of (that is, have an absence of) glyoxal, or free of solutions of MC, HEMC, or HPMC. Total amount of the binding liquid added to the raw material cellulose ether powders is 20 weight percent or more, or even 25 weight percent or more. At the same time, the total amount of the binding liquid added to the raw material cellulose ether powders is 33 weight percent or less, or even 31 weight percent or less. Weight percentage of the binding liquid is based on the total weight of the raw material cellulose ether powders and the binding liquid. If the weight percentage of the binding liquid is higher than 33 weight percent, the raw material cellulose ether powders tends to form granulates rather than agglomerates, so that the dry-mix composition comprising thereof may result in inferior clumping performance when mixed with water to form a mortar.

Preferably, the aqueous solution of CMC is used as the binding liquid, so that the raw material cellulose ether powders are agglomerated with CMC as a binder. Viscosity grade of CMC useful in this invention, measured as two weight percent aqueous solution at 20°C using a Viscotester VT 550 rotational viscometer, is desirably less than 150 mPa.s, less than 100 mPa.s, or even less than 50 mPa.s. Examples of commercially available CMC useful in the present invention include WALOCEL^{™} CRT 30 PA (WALOCEL is a trademark of The Dow Chemical Company). The aqueous solution of CMC useful in this invention desirably has a concentration of 0.1 weight percent or more, 0.3 weight percent or more, or even 0.6 weight percent or more. At the same time, the concentration of CMC is desirably 10 weight percent or less, 6 weight percent or less, or even 4 weight percent or less. Weight percentage of CMC in the aqueous solution is based on the total aqueous solution weight.

The process of preparing the cellulose ether agglomerates of the present invention also includes the step of drying the agglomerates by non-contact drying means, for example, a fluid bed dryer. Drying the cellulose ether agglomerates can be conducted at a temperature of more than about 50°C, preferably about 70°C. Alternatively, the cellulose ether agglomerates may be dried to a residual water content of less than about 10 weight percent of the cellulose ether agglomerates, irrespective of temperature.

The cellulose ether agglomerates can be present in the dry-mix composition at a concentration of 0.05 weight percent or more, 0.1 weight percent or more, or even 0.15 weight percent or more. At the same time, the concentration of the cellulose ether agglomerates may be 1.0 weight percent or less, 0.4 weight percent or less, or even 0.35 weight percent or less. Weight percentage of the cellulose ether agglomerates is based on the total dry weight of the dry-mix composition.

The dry-mix composition of the present invention also comprises gypsum powder. Gypsum herein may comprise crystallographic modifications of calciumsulphate (CaSO₄), calciumsulphate hemihydrate (CaSO₄·1/2H₂O), calciumsulphate dihydrate (CaSO₄·2H₂O) or mixtures thereof. The gypsum powder may be present in the dry-mix composition in an amount of 10 weight percent or more, 40 weight percent or more, 60 weight percent or more, or even 80 weight percent or more. At the same time, the amount of the gypsum powder in the dry-mix composition can be 99.5 weight percent or less, 98 weight percent or less, or even 95 weight percent or less. Weight percentage of the gypsum powder is based on the total dry weight of the dry-mix composition.

In addition to the gypsum powder and the cellulose ether agglomerates, the dry-mix composition of the present invention can also comprise optional fillers. Examples of suitable fillers may include slaked lime generally in an amount of 0-30 weight percent, mineral aggregates generally in an amount of 0-30 weight percent (for example, quartz sand, limestone sand, limestone gravel, limestone powder or mica), light aggregate (for example, perlite) generally in amount of 0-20 weight percent and mixtures thereof. Weight percentage of the optional fillers is based on the total dry weight of the dry-mix composition.

The dry-mix composition of the present invention can further comprise, or be free from, any one or combination of more than one of the following additives: additional organic or inorganic thickening agents and/or secondary water retention agents (for example, starch derivatives, guar derivatives, synthetic thickeners, polyacrylamide, or polyvinyl alcohol), anti-sag agents, air entraining agents, wetting agents, defoamers, superplasticizers, dispersants, calcium complexing agents, retarders, accelerators, water repellents, water redispersible polymer powders, biopolymers and fibers. If present, the optional additives may be in amount of 0.01 weight percent or more, or even 0.1 weight percent or more. At the same time, the optional additives may be in amount of 5 weight percent or less, or even 3 weight percent or less. Weight percentage of the optional additives is based on the total dry weight of the dry-mix composition.

The dry-mix composition of the present invention is generally prepared by admixing (a) gypsum powder, (b) cellulose ether agglomerates, and optionally fillers and/or additives described above. The dry-mix composition of the present invention may be useful as plasters and filling compounds, preferably gypsum machine plaster.

When mixed with water to form a mortar, the dry-mix composition of the present invention surprisingly results in little clumping of the mortar obtained. That means that the mortar obtained shows at least 50% reduction of average size-dependant clumps count, as compared to a mortar containing the same concentration of conventional, that is, non-agglomerated, cellulose ether. The average size-dependant clumps count is determined by the testing method described in the Examples section below. At the same time, the mortar of the present invention has comparable water retention and thickening properties, as compared to a mortar containing conventional, that is, non-agglomerated, cellulose ether. Thickening property of a mortar is measured as the slump test described in the Examples section below.

The mortar above-mentioned can be simply formed by mixing water with the dry-mix composition of the present invention. The water/solids weight ratio of the mortar is generally from 0.2 to 0.9, from 0.4 to 0.8, or even from 0.5 to 0.7.

The present invention is also a method for using cellulose ether agglomerates in a dry-mix composition to cause thickening and water retention with little clumping upon hydration of the dry-mix composition to a mortar. The method of the present invention comprises the step of including cellulose ether agglomerates in a dry-mix composition comprising gypsum powder. The cellulose ether includes methylcellulose, hydroxyethyl methyl cellulose, hydroxypropyl methylcellulose, hydroxypropyl cellulose, hydroxyethyl cellulose or mixtures thereof. The dry-mix composition and the cellulose ether agglomerates are the same as described above.

The method of the present invention is independent of pH value. Thus, the method does not require a control of pH value of the mortar, so as to achieve little clumping without adverse effects on the water retention and thickening properties of the mortar.

### EXAMPLES

The following examples illustrate embodiments of the present invention. All parts and percentages are by weight unless otherwise indicated.

WALOCEL^{™} MKX 60000 PF 01 cellulose ether is a hydroxyethyl methylcellulose (HEMC) commercially available from Dow Wolff Cellulosics GmbH (WALOCEL is a trademark of The Dow Chemical Company).

MP 75L gypsum spray plaster base material is obtained from Knauf Westdeutsche Gips KG.

The following standard analytical equipment and methods are used:

### Solution viscosity

The viscosities of aqueous solutions of cellulose ether were measured using a Viscotester VT 550 rotational viscometer supplied by Thermo Haake at 20°C. Unless otherwise mentioned, the constant shear rate of the viscometer was 2.55 second⁻¹ using a MV2 rotor and a MV measuring cup with a tempering jacket.

### Particle size distribution of cellulose ether

The particle size distribution of cellulose ether was measured by a circular and horizontal vibration type sieving machine with a specified set of sieves, ISO 3310, Part 1. 50 grams (g) of cellulose ether were sieved using the set of sieves whose mesh sizes correspond to the required particle sizes. The sieve fractions are weighed and the percentage particle size distribution is calculated accordingly. The dust content is the fraction smaller than 63 microns after sieving the cellulose ether accordingly.

### Bulk density

The untapped bulk density of cellulose ether was determined by weighing the contents of a known volume beaker completely filled with cellulose ethers. Values given are average values of three measurements.

### Time to 95% viscosity build-up

The viscosity build-up of cellulose ether was measured by analyzing the torque over the time (using a Viscotester VT 550 rotational viscometer from Thermo Haake) at 400 revolutions per minute (rpm) for 30 minutes. Time to 95% viscosity build-up was defined as the time in minute where 95% of the final torque was obtained.

Cellulose ether was dispersed in water at 20+/- 0.5°C, and stirred at 400 rpm with a paddle shaped stirrer (Thermo Haake, order number 807-0505, rotor, paddle-shaped) to form 200 g of an aqueous solution with the following concentration: If cellulose ether has a solution viscosity as a one weight percent aqueous solution of more than 1,000 mPa.s, a one weight percent solution of the cellulose ether will be prepared in this test. If cellulose ether has a solution viscosity as a one weight percent aqueous solution of less than 1,000 mPa.s, a two weight percent solution of the cellulose ether will be prepared in this test.

After dispersing the cellulose ether in water, the torque was immediately measured at a rate of 20 datapoints per minute for 30 minutes before stopping the test. Torque data of the last 5 minutes of the measurement were averaged and defined as the final torque value. Standard deviation of the torque data of the last 5 minutes of the measurement was calculated. If the standard deviation is larger than 3%, it indicates that a constant final torque value has not been reached. In this case, the time to 95% viscosity build-up is defined as "> 30 minute". If the standard deviation is less than 3%, the time to 95% viscosity build-up was defined as the time in minute where 95% of the final torque was obtained.

### Measurement of surface area of cellulose ether

A krypton BET surface area analysis was performed on a Micrometrics Accelerated Surface Area and Porosimetry instrument (ASAP 2020). Approximate 0.5-1.0 g of samples were weighed with an accuracy of +/-0.001 g, then degassed and dried under vacuum at 90 °C until the pressure was below 10 microbars before analyzing. The dry weight of the samples was used for calculating the surface area. The instrument employs a static (volumetric) method of dosing the samples and measures the quantity of krypton gas that can be physically adsorbed on the samples at liquid nitrogen temperature (77 Kelvin (K)). For the multi-point BET measurement, the volume of krypton uptake was measured at eight pre-selected relative pressure points (0.02 - 0.20) at a constant temperature of 77 K. The relative pressure is the ratio of the krypton pressure applied to the samples (P) to the vapor pressure of krypton at 77 K (P0). Testing conditions for the surface area measurement include 10 second equilibration interval, 8-point pressure table and 5.0% 1.0 millimeter of mercury (mmHg) P/P0.

### Water retention property

The water retention property of mortars was measured in accordance with EN 459 (2010) "Building lime" - Part 2: Test methods. Water dosage is 68 weight percent of the dry weight of the gypsum plaster base material.

### Slump test

Slump of mortars, being an indication of viscosity, was measured in accordance with EN 1015 (2007) "Methods of test for mortar for masonry" - Part 3: Determination of consistence of fresh mortar (by flow table). Water dosage is 68 weight percent of the dry weight of the gypsum plaster base material.

### Clumping performance

Clumping in mortars was evaluated by an average value of size-dependant clump counts. Dry-mix compositions were mixed with water in sufficient amount to form plasters having a slump of from 200 to 210 millimeter (mm). The plaster was then subject to low speed mechanical mixing in a laboratory mixer for another thirty seconds before being transferred onto an 1800 centimeter² area of a gypsum plasterboard. The gypsum plasterboard was then agitated so that the plaster evenly fills the area to a thickness of about 3 mm, without using any tools to assist levelling. The plaster is then left to set for a period of 24 to 48 hours. The size and number of clumps observable on the surface of the plaster were recorded.

Clumping performance is evaluated in considering both the number of clumps and their size. Large clumps are considered to have higher impact factors on clumping performance than small or medium sized ones (as defined below),
Small clumps with a diameter less than 6 mm having an impact factor of one;
Medium sized clumps with a diameter from equal to or large than 6 mm to less than 12 mm having an impact factor of 3;
Large clumps with a diameter equal to or large than 12 mm having an impact factor of 9; thus, Size-dependant clump count= 1*Number of Small clumps+3*Number of Medium sized clump+9*Number of Large clumps.

Values of size-dependant clump count given are average values of four measurements. A mortar with a lower value of average size-dependant clump count performs better in reducing clumping than a mortar with a higher value of average size-dependant lump count.

### Preparation of cellulose ether agglomerates (I) for Example 1

WALOCEL MKX 60000 PF01 HEMC is fluidized with air in a fluid bed processor. Carboxymethyl cellulose (CMC) in water solution (at a concentration of 2.5 weight percent based on total solution weight) is top sprayed through a nozzle on the fluidized material. The air inlet temperature is held constant at approximately 50°C during spraying while the fluidized material temperature is approximately 35°C. The addition of the CMC solution is stopped when the ratio of added CMC solution / (sum of added CMC solution and HEMC) is 0.3. Agglomerates obtained are subsequently dried in a fluid bed dryer (Huettlin Mycrolab) at an air inlet temperature of 70°C for certain time period until the agglomerates have reached a temperature of around 52-54°C. The physical properties of the resultant cellulose ether agglomerates (I) are listed in Table 1.

### Preparation of cellulose ether agglomerates (II) for Example 2

WALOCEL MKX 60000 PF01 HEMC is fluidized with air in a fluid bed processor. Water is top sprayed through a nozzle on the fluidized material. The air inlet temperature is held constant at approximately 50°C during spraying while the fluidized material temperature is approximately 35°C. The addition of water is stopped when the ratio of added water / (sum of added water and HEMC) is 0.3. Agglomerates obtained is subsequently dried in a fluid bed dryer (Huettlin Mycrolab) at an air inlet temperature of 70°C until the agglomerate has reached a temperature of around 52-54°C. The physical properties of the resultant cellulose ether agglomerates (II) are listed in Table 1.

**Table 1**

| | 200-1,000 microns [Weight percent] | 63 - 200 microns [Weight percent] | < 63 microns [Weight percent] | Density [g/L] | Viscosit y (one weight percent) [mPa·s] | Time to 95% viscosity build-up [minute] | BET surface area [m²/g] |
|---|---|---|---|---|---|---|---|
| WALOCEL MKX 60000 PF01 HEMC | 0.1 | 45.1 | 54.8 | 280 | 6,990 | >30 | 0.30 |
| Cellulose ether agglomerates (I) | 25.8 | 61.3 | 12.9 | 179 | 6,440 | 3.2 | 0.26 |
| Cellulose ether agglomerates (II) | 39.8 | 53.1 | 7.1 | 146 | 6,780 | 7.6 | 0.22 |

| | | | | | | | |
|---|---|---|---|---|---|---|---|
| *Weight percentage of particles is based on the total weight of cellulose ether. | | | | | | | |

### Examples 1-2 and Comparative Example A

Dry-mix compositions of Examples 1, 2, and Comparative Example A were formed by mixing MP 75L gypsum spray plaster base material with cellulose ether agglomerates (I), cellulose ether agglomerates (II) and WALOCEL MKX 60000 PF01 HEMC, respectively. For all the above dry-mix compositions, the cellulose ether dosage is 0.24 weight percent of the dry weight of the gypsum plaster base material. The dry-mix compositions are then mixed with certain amount of water to form mortars for performance evaluation. Properties of the mortars are shown in Table 2.

As compared to the mortar comprising commercial WALOCEL MKX 60000 PF01 HEMC (Comparative Example A), the mortars of Examples 1-2 comprising cellulose ether agglomerates show comparable water retention, and comparable thickening property as indicated by slump values.

The average size-dependant lump count for the mortar of Comparative example A is 46. In contrast, the mortars of Example 1 and Example 2 only have an average size-dependant lump count of 15 and 10, respectively. It indicates that the mortars comprising cellulose ether agglomerates perform significantly better in reducing clumping than the mortar containing the conventional cellulose ether (Comparative example A).

**Table 2**

| | Type of cellulose ether | Average slump [mm] | Water retention [%] | | Average size-dependant lump count |
|---|---|---|---|---|---|
| | | | 5 minute | 60 minute | |
| Comparative example A | WALOCEL MKX 60000 PF 01 HEMC | 177 | 97.6 | 93.0 | 46 |
| Example 1 | Cellulose ether agglomerates (I) | 178 | 97.6 | 92.4 | 15 |
| Example 2 | Cellulose ether agglomerates (II) | 177 | 97.0 | 91.4 | 10 |

## Claims

1. A dry-mix composition comprising: (a) gypsum powder, and (b) cellulose ether agglomerates, wherein the cellulose ether is methylcellulose, hydroxyethyl methylcellulose, hydroxypropyl methylcellulose, hydroxypropyl cellulose, hydroxyethyl cellulose or mixtures thereof, wherein the cellulose ether agglomerates comprise cellulose ether particles bound together with an aqueous solution of carboxymethyl cellulose or pure water, and wherein the total amount of the binding liquid added to the raw material cellulose ether particles is 20 to 33 weight %, based on the total weight of the raw material cellulose ether particles and the binding liquid, and further wherein less than 14 wt% of the cellulose ether agglomerate particles have particle size smaller than 63 µm after sieving, and the fraction of cellulose ether agglomerate particles with particle size of 200-1,000 µm is from more than 20 to 50 wt%, where weight percent of particles is based on the total weight of the cellulose ether agglomerates.

2. The dry-mix composition of claim 1, wherein the cellulose ether agglomerates have a surface area of 0.18 square meter per gram or higher.

3. The dry-mix composition of any previous claim, wherein the cellulose ether agglomerates comprise cellulose ether particles bound together with carboxymethyl cellulose.

4. The dry-mix composition of any previous claim, wherein the cellulose ether is hydroxyethyl methylcellulose and/or hydroxypropyl methylcellulose.

5. The dry-mix composition of any previous claim, wherein the gypsum powder is in an amount of 10 weight percent or more, where weight percent is based on the total dry weight of the dry-mix composition.

6. A method for using cellulose ether agglomerates in a dry-mix composition to cause thickening and water retention with little clumping upon hydration of the dry-mix composition to a mortar, the method comprising including the cellulose ether agglomerates in a dry-mix composition comprising gypsum powder, wherein the cellulose ether is methylcellulose, hydroxyethyl methyl cellulose, hydroxypropyl methylcellulose, hydroxypropyl cellulose, hydroxyethyl cellulose or mixtures thereof, wherein the cellulose ether agglomerates comprise cellulose ether particles bound together with an aqueous solution of carboxymethyl cellulose or pure water, and wherein the total amount of the binding liquid added to the raw material cellulose ether powders is 20 to 33 weight %, based on the total weight of the raw material cellulose ether particles and the binding liquid, and further wherein less than 14 wt% of the cellulose ether agglomerate particles have particle size smaller than 63 µm after sieving, and the fraction of cellulose ether agglomerate particles with particle size of 200-1,000 µm is from more than 20 to 50 wt%, where weight percent of particles is based on the total weight of the cellulose ether agglomerates.

7. The method of claim 6, wherein the cellulose ether agglomerates have a surface area of 0.18 square meter per gram or higher.

8. The method of claim 6, wherein the cellulose ether agglomerates comprise cellulose ether particles bound together with carboxymethyl cellulose.

9. The method of claim 6, wherein the cellulose ether is hydroxyethyl methylcellulose and/or hydroxypropyl methylcellulose.

## Patentansprüche

1. Trockenmischungszusammensetzung, umfassend: (a) Gipspulver und (b) Celluloseetheragglomerate, wobei der Celluloseether Methylcellulose, Hydroxyethylmethylcellulose, Hydroxypropylmethylcellulose, Hydroxypropylcellulose, Hydroxyethylcellulose oder Mischungen davon ist, wobei die Celluloseetheragglomerate Celluloseetherteilchen umfassen, die mit einer wässrigen Lösung von Carboxymethylcellulose oder reinem Wasser zusammengebunden sind, und wobei die Gesamtmenge der Bindeflüssigkeit, die den Rohmaterialcelluloseetherteilchen hinzugefügt wird, 20 bis 33 Gew.-%, basierend auf dem Gesamtgewicht der Rohmaterialcelluloseetherteilchen und der Bindeflüssigkeit, beträgt, und ferner wobei weniger als 14 Gew.-% der Celluloseetheragglomeratteilchen eine Teilchengröße aufweisen, die kleiner als 63 µm nach dem Sieben ist, und die Fraktion von Celluloseetheragglomeratteilchen mit einer Teilchengröße von 200-1.000 µm von mehr als 20 bis 50 Gew.-% beträgt, wobei das Gewichtsprozent der Teilchen auf dem Gesamtgewicht der Celluloseetheragglomerate basiert.

2. Trockenmischungszusammensetzung nach Anspruch 1, wobei die Celluloseetheragglomerate einen Oberflächenbereich von 0,18 Quadratmeter pro Gramm oder höher aufweisen.

3. Trockenmischungszusammensetzung nach einem der vorstehenden Ansprüche, wobei die Celluloseetheragglomerate Celluloseetherteilchen umfassen, die mit Carboxymethylcellulose zusammengebunden sind.

4. Trockenmischungszusammensetzung nach einem der vorstehenden Ansprüche, wobei der Celluloseether Hydroxyethylmethylcellulose und/oder Hydroxypropylmethylcellulose ist.

5. Trockenmischungszusammensetzung nach einem der vorstehenden Ansprüche, wobei das Gipspulver in einer Menge von 10 Gewichtsprozent oder mehr vorliegt, wobei das Gewichtsprozent auf dem Gesamttrockengewicht der Trockenmischzusammensetzung basiert.

6. Verfahren zum Verwenden von Celluloseetheragglomeraten in einer Trockenmischungszusammensetzung, um eine Verdickung und eine Wasserretention mit geringer Verklumpung bei der Hydratation der Trockenmischungszusammensetzung zu einem Mörtel zu bewirken, das Verfahren umfassend ein Einschließen der Celluloseetheragglomerate in eine Trockenmischungszusammensetzung, umfassend Gipspulver, wobei der Celluloseether Methylcellulose, Hydroxyethylmethylcellulose, Hydroxypropylmethylcellulose, Hydroxypropylcellulose, Hydroxyethylcellulose oder Mischungen davon ist, wobei die Celluloseetheragglomerate Celluloseetherteilchen umfassen, die mit einer wässrigen Lösung von Carboxymethylcellulose oder reinem Wasser zusammengebunden sind, und wobei die Gesamtmenge der Bindeflüssigkeit, die den Rohmaterialcelluloseetherpulvern zugesetzt wird, zu 20 bis 33 Gew.-%, basierend auf dem Gesamtgewicht der Rohmaterialcelluloseetherteilchen und der Bindeflüssigkeit, beträgt, und ferner wobei weniger als 14 Gew.-% der Celluloseetheragglomeratteilchen eine Teilchengröße aufweisen, die kleiner als 63 µm nach dem Sieben ist, und die Fraktion der Celluloseetheragglomeratteilchen mit der Teilchengröße von 200-1.000 µm von mehr als 20 bis 50 Gew.-% beträgt, wobei das Gewichtsprozent von Teilchen auf dem Gesamtgewicht der Celluloseetheragglomerate basiert.

7. Verfahren nach Anspruch 6, wobei die Celluloseetheragglomerate einen Oberflächenbereich von 0,18 Quadratmeter pro Gramm oder höher aufweisen.

8. Verfahren nach Anspruch 6, wobei die Celluloseetheragglomerate Celluloseetherteilchen umfassen, die mit Carboxymethylcellulose zusammengebunden sind.

9. Verfahren nach Anspruch 6, wobei der Celluloseether Hydroxyethylmethylcellulose und/oder Hydroxypropylmethylcellulose ist.

## Revendications

1. Composition de mélange sec comprenant : (a) de la poudre de gypse, et (b) des agglomérats d'éther de cellulose, dans laquelle l'éther de cellulose est méthylcellulose, hydroxyéthylméthylcellulose, hydroxypropylméthylcellulose, hydroxypropylcellulose, hydroxyéthylcellulose ou leurs mélanges, dans lequel les agglomérats d'éther de cellulose comprennent des particules d'éther de cellulose liées ensemble par une solution aqueuse de carboxyméthylcellulose ou d'eau pure, et dans lequel la quantité totale du liquide de liaison ajouté aux particules d'éther de cellulose de matière première est comprise entre 20 et 33 % en poids, sur la base du poids total des particules d'éther de cellulose de matière première et du liquide de liaison, et en outre dans lequel moins de 14 % en poids des particules d'agglomérat d'éther de cellulose ont une taille de particule inférieure à 63 µm après tamisage, et la fraction des particules d'agglomérat d'éther de cellulose avec une taille de particule de 200 à 1 000 µm est de plus de 20 à 50 % en poids, où le pourcentage en poids des particules est basé sur le poids total des agglomérats d'éther de cellulose.

2. Composition de mélange sec selon la revendication 1, dans laquelle les agglomérats d'éther de cellulose ont une surface égale ou supérieure à 0,18 mètre carré par gramme.

3. Composition de mélange sec selon l'une quelconque revendication précédente, dans laquelle les agglomérats d'éther de cellulose comprennent des particules d'éther de cellulose liées ensemble par carboxyméthylcellulose.

4. Composition de mélange sec selon l'une quelconque revendication précédente, dans laquelle l'éther de cellulose est hydroxyéthylméthylcellulose et/ou hydroxypropylméthylcellulose.

5. Composition de mélange sec selon l'une quelconque revendication précédente, dans laquelle la poudre de gypse est en une quantité égale ou supérieure à 10 pour cent en poids, où le pourcentage en poids est basé sur le poids sec total de la composition de mélange sec.

6. Procédé d'utilisation d'agglomérats d'éther de cellulose dans une composition de mélange sec pour provoquer un épaississement et une rétention d'eau avec peu d'agglutination lors de l'hydratation de la composition de mélange sec dans un mortier, le procédé comprenant l'inclusion des agglomérats d'éther de cellulose dans une composition de mélange sec comprenant de la poudre de gypse, dans lequel l'éther de cellulose est méthylcellulose, hydroxyéthylméthylcellulose, hydroxypropylméthylcellulose, hydroxypropylcellulose, hydroxyéthylcellulose ou leurs mélanges, dans lequel les agglomérats d'éther de cellulose comprennent des particules d'éther de cellulose liées ensemble par une solution aqueuse de carboxyméthylcellulose ou d'eau pure, et dans lequel la quantité totale du liquide de liaison ajouté aux poudres d'éther de cellulose de matière première est de 20 à 33 % en poids, sur la base du poids total des particules d'éther de cellulose de matière première et du liquide de liaison, et en outre dans lequel moins de 14 % en poids des particules d'agglomérat d'éther de cellulose ont une taille de particule inférieure à 63 µm après tamisage, et la fraction des particules d'agglomérat d'éther de cellulose avec une taille de particule comprise entre 200 et 1 000 µm est de plus de 20 et 50 % en poids, où le pourcentage en poids des particules est basé sur le poids total des agglomérats d'éther de cellulose.

7. Procédé selon la revendication 6, dans lequel les agglomérats d'éther de cellulose ont une surface égale ou supérieure à 0,18 mètre carré par gramme.

8. Procédé selon la revendication 6, dans lequel les agglomérats d'éther de cellulose comprennent des particules d'éther de cellulose liées ensemble par carboxyméthylcellulose.

9. Procédé selon la revendication 6, dans lequel l'éther de cellulose est hydroxyéthylméthylcellulose et/ou hydroxypropylméthylcellulose.
